**Europäisches Patentamt**

**European Patent Office**

**Office européen des brevets**

(19)

(11) Veröffentlichungsnummer: **0 042 472**
**B1**

(12) # EUROPÄISCHE PATENTSCHRIFT

(45) Veröffentlichungstag der Patentschrift:
19.09.84

(51) Int. Cl.³: **F 16 L 21/02**

(21) Anmeldenummer: **81102075.9**

(22) Anmeldetag: **19.03.81**

(54) **Dichtungsanordnung für eine Muffenverbindung.**

(30) Priorität: **24.06.80 DE 3023619**

(43) Veröffentlichungstag der Anmeldung:
**30.12.81 Patentblatt 81/52**

(45) Bekanntmachung des Hinweises auf die Patenterteilung:
**19.09.84 Patentblatt 84/38**

(84) Benannte Vertragsstaaten:
**AT BE CH FR GB IT LI NL SE**

(56) Entgegenhaltungen:
**DE - A - 2 043 100**
**DE - A - 2 449 753**
**DE - A - 2 536 253**
**DE - A - 2 726 959**
**DE - B - 1 675 393**
**DE - C - 699 735**
**DE - U - 1 900 436**
**DE - U - 1 954 708**
**US - A - 1 570 223**

(73) Patentinhaber: **WOCO Franz-Josef Wolf & Co.,
Sprudelallee 19, D-6483 Bad Soden-Salmünster (DE)**

(72) Erfinder: **Wolf, Franz Josef, Sprudelallee 19, D-6483 Bad
Soden-Salmünster (DE)**
Erfinder: **Lauer, Hansjörg, Marburger Strasse 5,
D-6483 Bad Soden-Salmünster (DE)**

(74) Vertreter: **Jaeger, Klaus, Dr.rer.nat. Dipl.-Chem. et al,
Jaeger, Grams & Pontani Patentanwälte
Bergstrasse 48 1/2, D-8035 München-Gauting (DE)**

EP 0 042 472 B1

## Beschreibung

Die Erfindung betrifft eine Dichtungsanordnung für eine Muffenverbindung der im Oberbegriff des Patentanspruchs 1 genannten Art.

Die Erfindung betrifft insbesondere eine Dichtung für Muffenverbindungen mit relativ breitem Dichtspalt und relativ großer Fertigungstoleranz für die Nennweite der Dichtspaltbreite, das heißt, also für relativ große Toleranzen für den Innendurchmesser der Muffe und den Außendurchmesser des Spitzendes, die unter Bildung der Muffenverbindung gegeneinander abgedichtet werden müssen.

Solche Bedingungen treten insbesondere bei Muffenverbindungen von Rohren aus mineralischen Werkstoffen im Bereich größerer Nennweiten auf.

Solche mineralischen Rohrwerkstoffe, die zu sehr großen Toleranzen Anlaß geben, sind insbesondere gebrannter Ton (»Steinzeug«) und Beton. Größere Fertigungstoleranzen müssen aber auch bei Rohren aus anderen mineralischen Werkstoffen in Kauf genommen werden, beispielsweise bei Rohren aus faserverstärktem Zement, insbesondere Asbestzement.

Bei all solchen Muffenverbindungen von Rohren aus mineralischen Werkstoffen nimmt das Problem der Dichtung der Muffenverbindung mit zunehmender Nennweite der Rohre zu. Dies ist einerseits auf die zunehmend größer werdenden Sollbreiten der Dichtspalte, also auf den zunehmend größer werdenden Abstand zwischen der Innenwand der Muffe und der Außenwand des Spitzendes, bei gleichzeitig zunehmenden Absolutwerten der fertigungsbedingten Toleranz dieser Dichtspaltbreiten, andererseits auf das zunehmende Gewicht der Rohre zurückzuführen, die selbst unabhängig von äußeren zusätzlichen Lasten zu einer erheblichen Scherlastbeanspruchung der Muffenverbindung, also zu einer erheblichen Belastung senkrecht zur Längsachse der Rohre, Anlaß geben. Bei horizontalverlegten Rohren kann beispielsweise das volle Gewicht des Spitzendes in seinem unteren Scheitel auf dem unteren Scheitel der Muffe aufliegen, was zu einer sehr großen Materialverpressung einer beispielsweise gummielastischen Dichtung in diesem Bereich führt. Im gegenüberliegenden Scheitelbereich der Muffenverbindung werden die Verpressung und/oder die Spannungsverformung der gummielastischen Dichtung dagegen durch signifikante Vergrößerung des Dichtspaltes erheblich vermindert. Dies führt zu einer spürbaren Verminderung desjenigen inneren und äußeren Druckes, bis zu dem die Muffenverbindung insgesamt als dicht bezeichnet werden kann. Diese Verminderung des Grenzdruckes der Dichtheit der Muffenverbindung kann bei herkömmlichen Dichtungen, die im Bereich kleinerer Nennweiten der Rohre ohne weiteres erfolgreich verwendet werden können, durchaus bis zu 100% betragen. Die teilweise eleganten und heute in der Praxis eingeführten gummiringgedichteten Muffenverbindungen für kleinere Nennweiten der Rohre haben sich auf Grund der vorstehend genannten Probleme für große Rohrnennweiten nicht durchsetzen und bewähren können. Zum einen müssen die Schnurprofile der Dichtungsringe wegen der großen Sollbreiten der Dichtungsspalte so stark ausgebildet werden, daß sie wegen des hohen Werkstoffverbrauchs für die Praxis unbezahlbar teuer werden, zum anderen vermögen die bekannten Schnurprofile für Dichtungsringe, die sich bei kleinen Nennweiten bewährt haben, nicht mehr die Fertigungstoleranzbreiten des Dichtungsspaltes zu überbrücken. Bei zu starker Bemessung des Schnurprofils werden im unteren Toleranzbereich zum Einschieben des Spitzendes zu hohe Einschubkräfte benötigt, und zwar so hohe Einschubkräfte, die häufig nicht mehr realisierbar sind, während bei zu schwacher Bemessung solcher Dichtungsringe bei auch nur mäßiger Scherlast keine Scheiteldichtheit der Muffenverbindung mehr gewährleistet ist. Ein Dichtungsprofil, das in beiden aufgezeigten Grenzbereichen, nämlich dem kleinsten und dem größten toleranzbedingten Dichtungsspalt, zufriedenstellende Ergebnisse liefert, ist bislang nicht bekannt.

Eine Dichtung für eine Muffenverbindung gemäß dem Oberbegriff des Anspruches 1 ist aus der DE-B-1 675 393 bekannt. Nachteilig bei dieser bekannten Dichtung ist, daß funktionsgemäß der Dichteinsatz einerseits sowohl an Teilbereichen der Innenwand der Muffe und andererseits auch an der Mantelaußenfläche des Spitzendes anliegen soll. Gerade in Verbindung mit den beim bekannten Dichteinsatz verwendeten Rollringen eignet sich diese Dichtung nicht zur sicheren Abdichtung größerer Ringspaltbreiten wie sie gerade bei mineralischen Rohren mit größeren Innendurchmessern anzutreffen sind. Neben dem bekannten Problem der Flächendichtung, die bei den Rollringen mit kreisförmigem Schnurprofil auftreten, ist die Einsatzmöglichkeit der bekannten Dichtung nur dort vorstellbar, wo abgesehen von der radialen Breite des Dichteinsatzes zur Abdichtung der Ringspalte zwischen Muffe und Spitzende gerade das geringfügige radiale Herausragen der Rollringe aus ihrer entsprechenden Ringnut ausreicht. Da die bekannte Dichtung am Dichteinsatz radiale Vorsprünge aufweist, die funktionell zur Anlage gegen die Muffe bzw. das Spitzende kommen sollen, bedarf es gerade bei einem sehr engen Ringspalt zwischen Muffe und Spitzende eines erheblichen Kraftaufwandes zum Einschieben des Spitzendes.

Angesichts dieses Standes der Technik liegt der Erfindung die Aufgabe zugrunde, eine Dichtung für eine Muffenverbindung der eingangs genannten Art zu schaffen, die bei geringem Materialverbrauch für die gummielastischen Dichtungsringe insbesondere für Muffenverbindungen zwischen schweren Rohren mit großen Durchmessern, relativ breitem Dichtspalt und relativ großer Fertigungstoleranz für die Dichtspaltbreite eine zuverlässige Abdichtung gewährleistet und die Scherlastfertigkeit verbessert, sowie im Bereich der toleranzbedingten engen und engsten Dichtspalte die zur Herstellung der Rohrsteckverbindungen erforderliche Einschubkraft für das Spitzende senken kann.

Diese Aufgabe wird durch eine Dichtung gelöst, die erfindungsgemäß die im gekennzeichnenden Teil des Patentanspruchs 1 genannten Merkmale aufweist.

Die Erfindung schafft also eine Dichtung für eine Muffenverbindung, die aus einem im wesentlichen zylindrischen Ring als Dichteinsatz besteht, der auf seinem Außenmantel mindestens einen gegen die Innenwand der Muffe dichtenden Dichtungsring und auf seiner Innenwand ebenfalls mindestens einen Dichtungsring trägt, der gegen den Außenmantel des Spitzendes der Muffenverbindung dichtet. Der Dichteinsatz, der aus einem formstabilen Werkstoff besteht, hat eine radiale Wandstärke, die gleich oder nur geringfügig kleiner als die kleinste im Fertigungstoleranzbereich zulässige Dichspaltbreite ist. »Geringfügig kleiner« und entsprechend unter Bezug auf die Durchmesser auch »geringfügig größer« bezeichnet dabei ein nur geringes Übermaß oder Untermaß der angegebenen Bemessung, die gerade ein freies Aneinandervorbeigleiten der Bezugsteile ermöglichen, also gerade das praktisch reibungsfreie Einsetzen des Spitzendes in den Dichteinsatz gewährleisten, wenn die Muffe den im Toleranzbereich kleinsten Innendurchmesser und das Spitzende den im Toleranzbereich größten Außendurchmesser aufweisen. Des weiteren sind im Dichtungseinsatz Ringkammern zur Aufnahme der Dichtungsringe ausgebildet, deren Volumen und Profil so bemessen sind, daß sie einen zugeordneten Dichtungsring vollständig aufnehmen können und der Dichtungsring, wenn er vollständig in die Ringnut eingedrückt ist, einen vorgegebenen Grenzwert der Spannungsverformung und Materialverpressung nicht überschreitet.

Durch die Verwendung von Spreizlippenringen können bei dieser Ausbildung der Ringnuten im Dichteinsatz die Einschubkräfte auch bei toleranzbedingt engstem Dichtspalt außerordentlich klein gehalten werden. Durch die relativ zum Dichtspalt breite radiale Bemessung des Dichteinsatzes ist dieser formstabile Dichteinsatz in der Lage, bereits nach einem relativ kurzen radialen Versetzen des Spitzendes gegen die Muffe oder umgekehrt der Muffe gegen das Spitzende die gesamte auftretende Scherlast nach Art eines Anschlages stabil aufzunehmen. Auf Grund der Spreizlippenringe genügen jedoch bereits relativ kleine radiale Kraftkomponenten, um eine sichere Abdichtung zu schaffen. Hierdurch ist anderseits auch die Überbrückung und Abdichtung großer Dichtspalten möglich.

Es ist also nicht mehr erforderlich, die auftretenden Scherlasten gummielastisch aufzufangen. Mit anderen Worten, da nicht mehr die Dichtungsringe die Scherlast aufzufangen brauchen, können die Dichtungsringe von vornherein für eine sehr viel geringere erforderliche Materialverpressung ausgelegt werden. Die für die Dichtung der Erfindung einsetzbaren Dichtungsringe können daher in viel größerem Umfang Lippenspannungen zum Aufbringen des erforderlichen Dichtungsandrucks ausnutzen. Eine Herabsetzung der erforderlichen Mindestmaterialverpressung zu Gunsten größerer Lippenspannungsanteile im Dichtungsring bewirkt nicht nur eine weitere Materialersparnis, sondern vermindert weiterhin gleichzeitig die im Bereich engster Dichtspalte erforderlichen Einschubkräfte. Da die elastischen Dichtungsringe also nur noch die Dichtfunktion und keine scherlasttragende Funktion zu erfüllen brauchen, weil die Scherlast vom Dichteinsatz selbst aufgenommen wird, können die Dichtungsringe wesentlich schwächer als bei den bekannten Dichtungen bemessen werden.

Die in der Innenwand und der Außenwand des Dichteinsatzes vorgesehenen Ringnuten sind mit flach V-förmigem Profil ausgebildet und zur Aufnahme von Dichtungsringen mit gleichsinnig V-förmigem Schnurprofil bestimmt. Dabei ist der Öffnungswinkel des Schnurprofils der Dichtungsringe kleiner als der Öffnungswinkel des Ringnutprofils. Der Öffnungswinkel des Schnurprofils der Dichtungsringe liegt im entspannten Zustand vorzugsweise im Bereich von ungefähr 90°. Bei dieser Ausbildung kann der Dichtungsring mit seinem Fußbereich, also dem Bereich, der dem von den V-förmig gespreizten Lippen eingeschlossenen Winkel radial gegenüberliegt, entweder auf der Sohle der Ringnut befestigt sein, beispielsweise angeklebt, angeformt oder durch Spannmittel angespannt sein, oder kann im Fußbereich ringwulstartig ausgebildet sein und in einer profilkomplementären Ringkehle auf der Sohle der Nut aufliegen. Der Fußbereich eines solchen Spreizlippenringes kann aber beispielsweise auch rechteckig, quadratisch oder mit anderem Querschnittsprofil ausgebildet sein und in eine profilkomplementäre Kehle in der Sohle der Nut eingelegt, eingeklebt oder eingeklippst sein. Sind der Fußbereich des Dichtungsringes ringwulstartig und die Ringkehle als Hohlkehle mit kreisrundem Profil ausgebildet, so wird zwischen dem in diese Ringkehle eingelegten Dichtungsring und der Ringkehle ein Gelenkeffekt erzielt, der ein Verschwenken des Dichtungsringes in eine optimale Dichtungslage zuläßt. In diesem Fall ist die Ringkehle auf der Sohle der flach V-förmigen Ringnut vorzugsweise axial einseitig schwach hinterschnitten, und zwar in der radial innenliegenden Ringnut des Dichteinsatzes auf der zum Muffengrund weisenden Seite und in der radial außenliegenden Ringnut des Dichteinsatzes auf der zur Muffenöffnung weisenden Seite. Dadurch werden die gelenkig eingelegten Spreizlippendichtungsringe beim Einsetzen des Dichteinsatzes in die Muffe bzw. beim Einschieben des Spitzendes in den Dichteinsatz gegen eine axiale Verschiebung fixiert.

Eine zusätzliche Stabilisierung der Dichtung kann dadurch erzielt werden, daß an der zum Muffengrund weisenden Stirnseite des Dichteinsatzes vorzugsweise ein kreisringförmiger Innenflansch angeformt ist, dessen freier Innendurchmesser deutlich kleiner als der im Fertigungstoleranzbereich kleinste Außendurchmesser des Spitzendes und etwas größer als oder höchstens gleichgroß wie der im Fertigungstoleranzbereich größte Innendurchmesser des Spitzendes der bestimmungsgemäß herzustellenden Muffenverbindung. Durch diese Bemessung ist gewährleistet, daß im gesamten Toleranzbereich die Stirnseite des Spitzendes auf der zur Muffenöffnung weisenden Ringfläche des Innenflansches des Dichteinsatzes aufsitzt und den Dichteinsatz dadurch in seiner axialen Lage stabilisiert und fixiert.

Nach einer Weiterbildung der Erfindung hat der Dichteinsatz vorzugsweise eine axiale Gesamtlänge, die zumindest im wesentlichen gleich der Tiefe der Muffe ist, also gleich dem Abstand vom Rand der Muffenöffnung bis zum Muffenspiegel. Da diese axialen Abmessungen häufig nicht allzu groß sind, sich flach öffnende V-förmige Ringnuten jedoch axial relativ viel Raum erfordern, sind die Ringnuten im Dichteinsatz vorzugsweise so angeordnet, daß sich die aneinandergrenzenden bzw. benachbarten Schenkel jeweils einer nach radial innen offenen und einer nach radial außen offenen Ringnut in radialer Projektion weitgehend bis vollständig überlappen. Der Grad dieser Überlappung ist dabei selbstverständlich so zu bemessen, daß im Trennwandbereich ausreichend Material stehenbleibt, um die Formstabilität des Dichteinsatzes zu gewährleisten.

Der Dichteinsatz selbst kann prinzipiell aus beliebigen formstabilen Werkstoffen bestehen, beispielsweise aus Metall, Kunststoff, Keramik oder Verbundwerkstoffen. Vorzugsweise besteht der Dichteinsatz aus solchen Werkstoffen, die preiswert mit relativ guter Präzision gefertigt werden können. Insbesondere besteht der Dichteinsatz vorzugsweise aus Kunststoff, vor allem glasfaserverstärktem Kunststoff, oder aus relativ hart eingestellten Elastomeren. Wenn der Dichteinsatz aus Elastomeren besteht, sind die weicher eingestellten Dichtungsringe vorzugsweise direkt am Dichteinsatz einstückig angeformt, daß heißt anvulkanisiert.

Wenn der Dichteinsatz einen auf dem Muffengrund aufliegenden Innenflansch aufweist, kann dieser Innenflansch zur Verbesserung der Dichtung zusätzlich auf einer oder beider seiner Oberflächen stirnseitig wirkende Dichtprofile aufweisen, beispielsweise angeformte Dichtwülste, eingelegte O-Ringe oder eingelegte oder angeformte Ringlippen.

Die Erfindung ist im folgenden an Hand von Ausführungsbeispielen in Verbindung mit der Zeichnung näher erläutert. Es zeigt

Fig. 1 ein Ausführungsbeispiel der Dichtung für eine Muffenverbindung im Axialschnitt ohne Dichtungsringe und

Fig. 2 einen Axialschnitt durch ein Ausführungsbeispiel der Dichtung mit Dichtungsringen, jedoch vor dem Einschieben des Spitzendes.

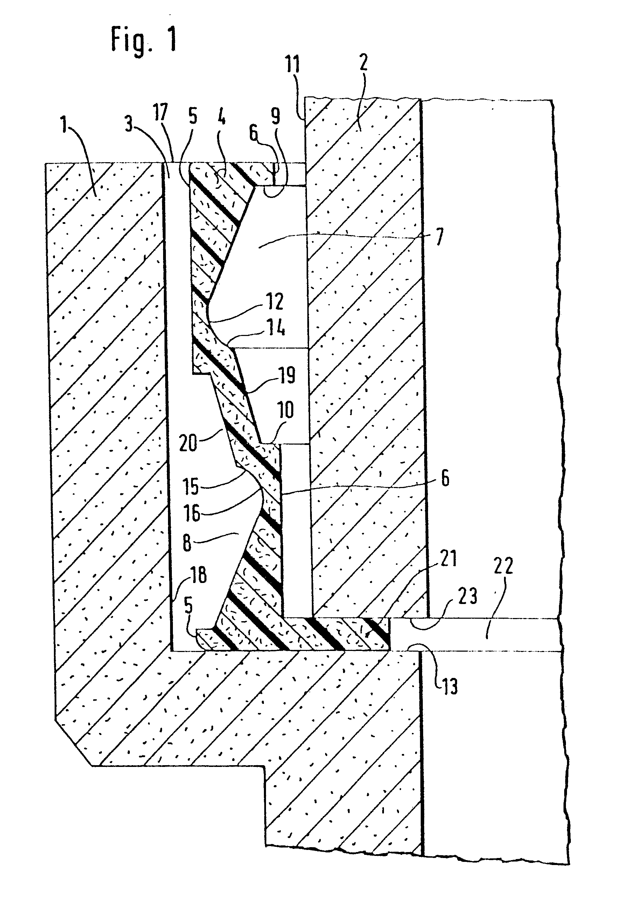

In der Fig. 1 ist im Axialschnitt ein Ausführungsbeispiel der Dichtung dargestellt. Die Fig. 1 zeigt die Muffe 1, das Spitzende 2 und im Ringspalt oder Dichtspalt 3 zwischen Muffe 1 und Spitzende 2 den zylinderringförmigen Dichteinsatz 4. Die Darstellung der Fig. 1 zeigt den Fall der im Toleranzbereich an der oberen Grenze liegenden Breite des Dichtspaltes 3.

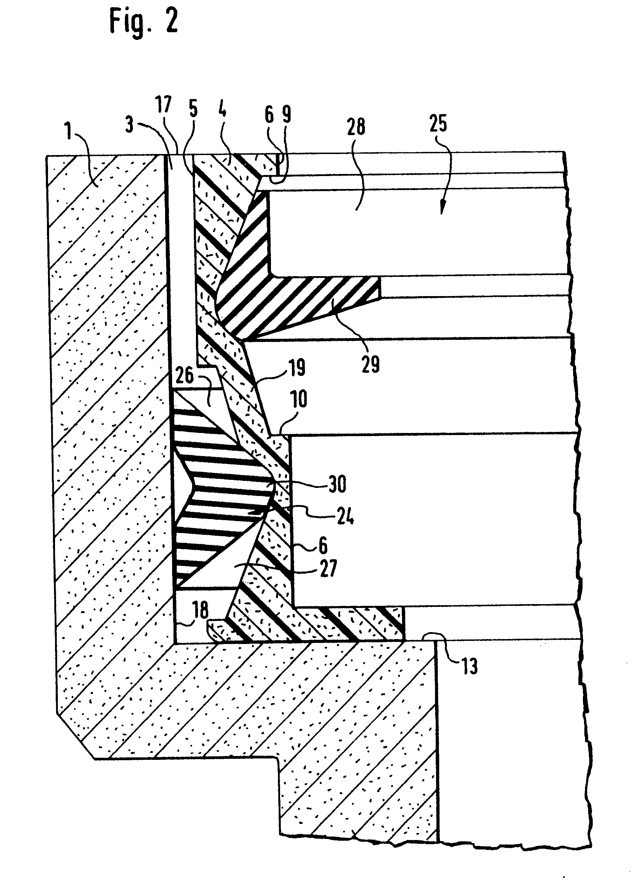

Die Breite des Dichteinsatzes 4, daß heißt also seine Wandstärke, gemessen zwischen der zylindrischen Außenwand 5 und der zylindrischen Innenwand 6 des Dichteinsatzes 4, entspricht der innerhalb des Toleranzbereichs zulässigen engsten Breite des Dichtspaltes 3. Im Dichteinsatz 4 ist eine nach radial innen offene Ringnut 7 und eine nach radial außen offene Ringnut 8 ausgebildet. Das Profil der Ringnut 7 öffnet sich im wesentlichen sehr flach V-förmig verlaufend nach radial innen. Die Nut 7 wird an ihren beiden einander gegenüberliegenden Außenseiten von radialstehenden Kreisringflächen 9, 10 begrenzt, die der verpressungsfreien Aufnahme der Lippenränder eines im Schnurprofil V-förmigen Spreizlippenringes 25 dienen, wenn der Außenmantel 11 des Spitzendes 2 unmittelbar auf der Innenwand 6 des Dichteinsatzes 4 aufliegt. Aus Gründen der übersichtlicheren Darstellung sind die Dichtungsringe nur in der Fig. 2 dargestellt. Der Dichtungsring 24, 25 ist mit kleinerem Öffnungswinkel, insbesondere mit einem Öffnungswinkel im Bereich von ungefähr 90° im entspannten Zustand ausgebildet. Bei eingestecktem Spitzende 2 dichten die beiden Lippen 28, 29 des Dichtungsringes 25 einmal nach axial auswärts weisend, einmal nach axial innen weisend unter Spreizspannung auf der Außenmantelfläche 11 des Spitzendes 2. Der den beiden Dichtlippen 28, 29 und dem von diesen eingeschlossenen Winkel radial außen gegenüberliegende Fußbereich 30 des Dichtungsringes 25 liegt dichtend in einer Hohlkehle 12, die in der Sohle der Ringnut 7 ausgebildet ist. Auf ihrer axial zum Muffengrund 13 weisenden Seite weist die Hohlkehle 12 eine schwache Hinterschneidung 14 auf, die verhindert, daß der Dichtungsring 25 beim Einschieben des Spitzendes 2 axial aus der Ringnut 7 herausgeschoben wird.

Die Ringnut 8 ist praktisch identisch wie die Ringnut 7 ausgebildet, und zwar lediglich mit dem Unterschied, daß sie sich nach radial außen statt nach radial innen öffnet und daß die Hinterschneidung 15 der Hohlkehle 16 auf der zur Muffenöffnung 17 weisenden Seite der Hohlkehle 16 liegt. Der in Fig. 2 dargestellte V-förmige Dichtungsring 24 dichtet mit seinen gespreizten Dichtlappen 26, 27 gegen die Innenwand 18 der Muffe 1.

Die axiale Länge des Dichteinsatzes 4 ist gleich der Tiefe der Muffe, gemessen vom Rand der Öffnung 17 bis zum Muffengrund 13. Um bei dieser relativ knapp bemessenen axialen Länge die breiten Öffnungen der V-förmigen Ringnuten 7 und 8 zu ermöglichen, sind die einander zugekehrten Schenkel 19, 20 der Ringnut 7 und der Ringnut 8 in radialer Sicht einander überlappend angeordnet.

Auf seiner zum Muffengrund 13 zurückgekehrten Stirnseite trägt der Dichteinsatz 4 einen einstückig angeformten kreisringförmigen Innenflansch 21. Der über seine zylindrische Innenfläche 22 gemessene freie Innendurchmesser des Innenflansches 21 ist deutlich kleiner als der im Fertigungstoleranzbereich kleinste Außendurchmesser des Spitzendes 2 und gleichzeitig etwas größer als der im Fertigungstoleranzbereich größte Innendurchmesser des Spitzendes 2. Dadurch wird der Dichteinsatz 4 über seinen angeformten Innenflansch 21 durch die Stirnringfläche 23 des Spitzendes 2 stabilisierend und axial fixierend auf die Ringfläche des Muffengrundes 13 gezwungen.

**Patentansprüche**

1. Dichtungsanordnung für eine Muffenverbindung, insbesondere mit relativ breitem Dichtspalt und relativ großer Fertigungstoleranz für die Dichtspaltbreite, mit einem zwischen Muffe (1) und Spitzende (2) einsetzbaren, im wesentlichen aus formstabilem Werkstoff bestehenden zylindrischen Dichteinsatz (4), der auf seiner Außenseite und auf seiner Innenseite je mindestens einen elastischen Dichtungsring (24, 25) trägt, wobei der Außendurchmesser des Dichteinsatzes (4) gleich oder geringfügig kleiner als der im Toleranzbereich kleinste Innendurchmesser der Muffe (1) und der Innendurchmesser des Dichteinsatzes (4) gleich oder geringfügig größer als der im Toleranzbereich größtmögliche Außendurchmesser des Spitzendes (2) ist, und die Dichtungsringe (24, 25) im Dichteinsatz (4) in ringkammerartigen Ringnuten (8, 7) angeordnet sind,

dadurch gekennzeichnet,

a) daß der Dichteinsatz (4) eine in der Innenwand (6) und eine in der Außenwand (5) ausgebildete flach V-förmige Ringnut (7, 8) aufweist, von denen jede den ihr zugeordneten Dichtungsring (24, 25) unter einer Verpressung und/oder Verspannung, die höchstens gleich der maximal zulässigen Verspannung und/oder Spannungsverformung ist, vollständig aufnehmen kann,

b) daß die Dichtungsringe (24, 25) als verschwenkbare Spreizlippenringe mit V-förmigem Schnurprofil ausgebildet sind,

c) daß der von beiden Dichtlippen (28, 29) der Dichtungsringe (24, 25) eingeschlossene V-förmige Winkel kleiner ist als der von den Flanken (19, 20) der zugeordneten Ringnut (7, 8) eingeschlossene Winkel,

d) daß der Fußbereich (30) der Dichtungsringe (24, 25), der dem von den Dichtlippen (28, 29) eingeschlossenen, V-förmigen Winkel gegenüberliegt, auf der Sohle (12) der Ringnut (7, 8) dichtend angeordnet ist und

e) daß die Dichtlippen (28, 29) des einen Dichtungsringes (25) gegen die Außenmantelfläche (11) des Spitzendes (2) und die Dichtlippen (26, 27) des anderen Dichtungsringes (24) gegen die Innenwand (18) der Muffe (1) abdichten.

2. Dichtungsanordnung nach Anspruch 1, dadurch gekennzeichnet, daß sich die axial benachbarten Flanken (19, 29) der flach V-förmigen Ringnuten (7, 8) radial weitgehend bis vollständig überlappen.

3. Dichtungsanordnung nach Anspruch 1 oder 2, dadurch gekennzeichnet, daß der vom V-förmigen Schnurprofil der Dichtringe (24, 25) eingeschlossene Winkel im entspannten Zustand etwa 90° beträgt.

4. Dichtungsanordnung nach einem der Ansprüche 1 bis 3, dadurch gekennzeichnet, daß der Fußbereich (30) der Dichtungsringe (24, 25) ringwulstartig abgerundet ausgebildet ist und in einer Ringkehle (12, 16) der Ringnut (7, 8) mit komplementärem Profil im Dichteinsatz (4) liegt.

5. Dichtungsanordnung nach Anspruch 4, dadurch gekennzeichnet, daß die Ringkehle (12, 16) auf der Sohle der flach V-förmigen Ringnut (7, 8) axial einseitig schwach hinterschnitten bei (14, 15) ist, und zwar in der radial innenliegenden Ringnut (7) auf der zum Muffengrund (13) weisenden Seite und in der radial außenliegenen Ringnut (8) auf der zur Muffenöffnung (17) weisenden Seite.

6. Dichtungsanordnung nach einem der Ansprüche 1 bis 5, dadurch gekennzeichnet, daß die Dichtungsringe in den Ringnuten (7, 8) fest angeformt oder in die Ringnuten (7, 8) fest eingeklebt oder eingespannt sind.

7. Dichtungsanordnung nach einem der Ansprüche 1 bis 6, dadurch gekennzeichnet, daß an der zum Muffengrund (13) weisenden Stirnseite des Dichteinsatzes (4) ein kreisringförmiger Innenflansch (21) angeformt ist, dessen freier Innendurchmesser deutlich kleiner als der im Fertigungstoleranzbereich kleinste Außendurchmesser des Spitzendes (2) und etwas größer als oder höchstens gleich groß wie der im Fertigungstoleranzbereich größte Innendurchmesser des Spitzendes (2) ist, für das die Dichtungsanordnung bestimmt ist.

8. Dichtungsanordnung nach einem der Ansprüche 1 bis 7, dadurch gekennzeichnet, daß die axiale Länge des Dichteinsatzes (4) zumindest im wesentlichen gleich dem Abstand vom Rand der Muffenöffnung (17) zum Muffengrund (13) ist.

**Claims**

1. Seal arrangement for a socket-spigot joint especially comprising a relatively large thickness of the sealing gap between the outer diameter of spigot end and the inner diameter of the socket end and which is suitable for relatively large process tolerances of the sealing gap;
further comprising
a cylindrical sealing insert (4) of a material essentially stable as to its shape which is inserted between the socket end (1) and the spigot end (2) and is adapted to carry at its outer radial side and at its inner radial side respectively at least an elastical sealing ring (24, 25);
said sealing insert (4) has an outer diameter equal to or slightly smaller than the inner diameter of the socket end (1) within the process tolerance and an inner diameter equal to or slightly greater than the maximum outer diameter of the spigot end (2); said sealing rings (24, 25) being provided in ring grooves (7, 8),

characterized in

a) that said sealing insert (4) comprises a flat V-shaped ring groove (7, 8) in its inner wall (6) and its outer wall (5), respectively, adapted to completely receive the corresponding sealing ring (24, 25) under pressure and/or deformation, which do not exceed the maximum allowable pressure and/or tensioning deformation;

b) that said sealing rings (24, 25) are constructed as pivotably spreadable sealing lips with a V-shaped profile in axial section;

c) that the V-shaped angle enclosed between said both sealing lips (28, 29) is smaller than the angle enclosed between the legs (19, 20) of the corresponding ring groove (7, 8);

d) that the base portion (30) of said sealing rings (24, 25) opposite to the V-shaped angle enclosed between said sealing lips (28, 29) is sealingly arranged at the bottom (12) of said ring grooves, respectively (7, 8); and

e) that said sealing lips (28, 29) of one sealing ring (25) lie sealingly against the outer wall surface (11) of said spigot end (2) while said sealing lips (26, 27) of said other sealing ring (24) lie sealingly against the inner wall surface (18) of said socket end (2).

2. Seal arrangement according to claim 1 wherein the axial adjacent legs (19, 20) of the flat V-shaped ring grooves (7, 8) largely to completely overlap each other radially.

3. Seal arrangement according to claims 1 or 2, wherein the enclosed angle between the V-shaped profile of said sealing rings (24, 25) in the unstressed natural state is approximately 90 degree.

4. Seal arrangement according to one of the claims 1 to 3, wherein said base portion (30) of said sealing rings (24, 25) is rounded like a torus and is arranged in the sealing insert (4) in a ring flute (12, 16) of the ring groove (7, 8) with a complementary profile.

5. Seal arrangement according to claim 4, wherein said ring flute (12, 16) at the bottom of the flat V-shaped ring groove (7, 8) is slightly undercut (at 14, 15) at one axial side, said axial side in the radial inner ring groove (7) forms the side showing towards the socket end bottom (13) and in the radial outer ring groove (8) forms the side showing towards the socket opening (17).

6. Seal arrangement according to one of the claims 1 to 5, wherein said sealing rings are formed securely in said ring grooves (7, 8) or are adhesively fixed or chucked in said ring grooves (7, 8), respectively.

7. Seal arrangement according to one of the claims 1 to 6, wherein at the front side of said sealing insert (4) showing towards the socket bottom (13) an annular flange (21) is formed having a free inner diameter distinctly less than the least outer diameter of said spigot end (2) and slightly larger than or at most equal to the largest inner diameter of the spigot end (2) within the process tolerance thereof, for which the sealing arrangement is provided.

8. Seal arrangement according to one of the claims 1 to 7, wherein the axial length of the sealing insert (4) is at least essentially equal to the distance between the rim of the socket opening (17) and the socket bottom (13).

**Revendications**

1. Ensemble de joint d'étanchéité pour un raccord de tuyau à manchon comportant notamment un intervalle de joint assez large, pour lequel les tolérances de fabrication relatives à la largeur sont assez grandes, et une pièce intercalaire (4) cylindrique, essentiellement en matériau indéformable, qui peut s'engager entre le manchon (1) et l'extrémité de tuyau (2) et porte sur chacune de ses surfaces, extérieure et intérieure, au moins un anneau de joint élastique (24, 25), le diamètre extérieur de la pièce intercalaire (4) étant égal ou légèrement inférieur au diamètre intérieur minimal du manchon (1) prévu par les tolérances, le diamètre intérieur de la pièce intercalaire (4) étant égal ou légèrement supérieur au diamètre extérieur maximal de l'extrémité de tuyau (2) prévu par les tolérances et les anneaux de joint (24, 25) de la pièce intercalaire (4) étant placés dans une rainure annulaire (8, 7) en forme de chambre annulaire, caractérisé en ce que la pièce intercalaire (4) comporte, dans chacune de ses parois, extérieure (6) et intérieure (5) une rainure annulaire (7, 8) en forme de V aplati dans laquelle l'anneau de joint correspondant (24, 25) peut complètement se loger sous l'action d'une pression et/ou d'une contrainte qui est au plus égale à la contrainte et/ou à la déformation sous contrainte maximales admissibles, en ce que les anneaux de joint (24, 25) sont des anneaux basculants à lèvres susceptibles de s'écarter et ayant un profil courant en V, en ce que l'angle en V délimité par les deux lèvres d'étanchéité (28, 29) des anneaux de joint (24, 25) est inférieur à l'angle délimité par les bords latéraux (19, 20) de la rainure annulaire (7, 8) correspondante, en ce que la base (30) des anneaux de joint (24, 25) qui se trouve en face de l'angle en forme de V délimité par les lèvres d'étanchéité (28, 29) s'applique d'une manière étanche sur le fond (12) de la rainure annulaire (7, 8) et en ce que les lèvres d'étanchéité (28, 29) de l'un des anneaux de joint (25) s'appliquent de manière à assurer l'étanchéité contre la surface extérieure (11) de l'extrémité de tuyau (2), tandis que les lèvres d'étanchéité (26, 27) de l'autre anneau de joint (24) s'appliquent contre la paroi intérieure (18) du manchon (1).

2. Ensemble de joint d'étanchéité selon la revendication 1, caractérisé en ce que les bords latéraux (19, 20) des rainures annulaires (7, 8) en forme de V qui sont voisins dans le sens axial se superposent largement ou complètement dans le sens radial.

3. Ensemble de joint d'étanchéité selon la revendication 1 ou 2, caractérisé en ce que l'angle délimité par le profil courant en forme de V des anneaux de joint (24, 25) est, en l'absence de contrainte, de l'ordre de 90°.

4. Ensemble de joint d'étanchéité selon l'une des revendications 1 à 3, caractérisé en ce que la base (30) des anneaux de joint (24, 25) est arrondie en forme de bourrelet et est placée dans une gorge annulaire (12, 16) de la rainure annulaire (7, 8) de profil complémentaire ménagée dans la pièce intercalaire (4).

5. Ensemble de joint d'étanchéité selon la revendication 4, caractérisé en ce que la gorge annulaire (12, 16) ménagée sur le fond de la rainure annulaire (7, 8) en forme de V aplati est légèrement entaillée en (14, 15) dans le sens axial, cette entaille étant réalisée dans la rainure annulaire (7) située vers l'intérieur dans le sens radial du côté voisin du fond (13) du manchon et dans la rainure annulaire (8) située vers l'extérieur dans le sens radial du côté voisin de l'ouverture (7) du manchon.

6. Ensemble de joint d'étanchéité selon l'une des revendications 1 à 5, caractérisé en ce que les anneaux de joint sont moulés solidement dans les rainures annulaires (7, 8) ou solidement collés ou serrés dans les rainures annulaires (7, 8).

7. Ensemble de joint d'étanchéité selon l'une des revendications 1 à 6, caractérisé en ce que le côté frontal de la pièce intercalaire qui est du côté du fond (13) du manchon comporte une bride intérieure circulaire (21) qui en fait partie intégrante et dont le diamètre intérieur libre est nettement inférieur au diamètre extérieur minimal de l'extrémité de tuyau (2) prévu par les tolérances de fabrication et légèrement supérieur ou tout au plus égal au diamètre intérieur maximal de l'extrémité de tuyau (2) prévu par les tolérances de fabrication de l'ensemble de joint.

8. Ensemble de joint d'étanchéité selon l'une des revendications 1 à 7, caractérisé en ce que la longueur de la pièce intercalaire (4) dans le sens axial est au moins approximativement égale à la distance comprise entre le bord de l'ouverture (17) du manchon et le fond (13) du manchon.

Fig. 1

# Fig. 2